Europäisches Patentamt

European Patent Office

Office européen des brevets

(11) Veröffentlichungsnummer: 0 189 052

A1

## (12) EUROPÄISCHE PATENTANMELDUNG

(21) Anmeldenummer: 86100166.7

(22) Anmeldetag: 08.01.86

(51) Int. Cl.⁴: B23K 37/04

(30) Priorität: 21.01.85 DE 3501794

(43) Veröffentlichungstag der Anmeldung:
30.07.86 Patentblatt 86/31

(84) Benannte Vertragsstaaten:
DE FR GB IT SE

(71) Anmelder: KRAFTWERK UNION
AKTIENGESELLSCHAFT
Wiesenstrasse 35
D-4330 Mülheim (Ruhr)(DE)

(72) Erfinder: Weber, Robert
Esperstrasse 23
D-8525 Uttenreuth(DE)
Erfinder: Mechtold, Helmut
Zum Kesselgraben 2
D-8500 Nürnberg 90(DE)

(74) Vertreter: Mehl, Ernst, Dipl.-Ing. et al
Postfach 22 01 76
D-8000 München 22(DE)

(54) Schweissvorrichtung für Rohrleitung.

(57) Die Erfindung bezieht sich auf eine Schweißvorrichtung - (2, 3) für Rohrleitungen mit Spannmitteln (6, 7, 8, 9, 10, 11, 12, 18 20) für die enzelnen Rohrabschnitte (13, 15, 17, 21) und Armaturen (14, 16). Bei solchen Schweißvorrichtungen besteht das Problem, daß an einem offenen Rohrende nur jeweils eine Schweißnaht angebracht werden kann, damit die innenspannende Spann- und Zen-triervorrichtung nach dem Schweißvorgang aus dem Rohr weider entfernt werden kann. Bei Kleinrohrleitungssystemen führt das häufig dazu, daß Störkanten zu spät erkannt werden. Die Erfindung sieht hierzu vor, daß die Spannmittel am Rohraußenumfang spannende Rohrklammern sind, die mit ihrem jeweils einen Ende an einer parallel zu dem zu verschweißenden Teilabschnitt verlaufenden Montagehilfsschiene (5) festklemmbar sind, und mit ihrem jeweils anderen Ende an einem der miteinander zu verschweißenden Rohr- bzw. Armaturenenden festklemmbar sind. Desweiteren ist vorgesehen, daß die Rohrklammern an ihren beiden Enden unabhängig betätigbare Klemm- bzw. Spannbackenpaare tragen. Eine erfindungsgemäße Schweißvorrichtung ist inbesondere für den Einsatz im Indu-strieanlagenbau geeignet.

FIG 1

Schweißvorrichtung für Rohrleitung

Die Erfindung bezieht sich auf eine Schweißvorrichtung für Rohrleitungen mit Spannmitteln zur Halterung der miteinander zu verschweißenden Rohrenden.

Im Industrieanlagenbau, insbesondere bei Kraftwerken, und Chemieanlagen werden Kleinrohrleitungen nach der Installation der größeren Komponenten und Bauelemente und nach Verlegung der stärkeren Rohrleitungen an letzter Stelle verlegt. Sie müssen dann an die vorgegebenen örtlichen räumlichen Verhältnisse angepaßt werden. Bei der Erstellung größerer Rohrnetze werden die vorgerichteten Enden der Rohre zunächst durch Heftschweißen provisorisch miteinander verbunden. Erst danach, wenn die Gesamtverrohrung zumindest eines Abschnittes steht, werden die eigentlichen Verbindungsnähte von Hand geschweißt. Bei hochbeanspruchten Rohren ist es dann erforderlich, die Heftschweißnaht unmittelbar vor dem Herstellen der Verbindungsnaht aufzutrennen, um eine saubere durchgehende Schweißraupe zu erhalten. Dieses Vorgehen ist aufwendig und zeitraubend.

Um die Montagezeit vor Ort zu verkürzen, werden auch schon kleinere Rohrabschnitte am Vormontageplatz unter Zuhilfenahme von Schraubstock und in die beiden jeweils miteinander zu verschweißenden Rohrenden einführbaren Zentriervorrichtungen zusammengeschweißt diese brauchen dann nur noch komplett vor Ort angeschweißt zu werden. Je größer diese vorgefertigten Rohrabschnitte jedoch werden, desto größer ist aber auch die Gefahr der Kollosion mit unvorhergesehenen Störkanten oder Hindernissen.

Der Erfindung liegt daher die Aufgabe zugrunde, eine universell anwendbare Schweißvorrichtung für Kleinrohrleitungssysteme zu entwickeln, die flexibel genug ist, um an die unterschiedlichsten räumlichen Gegebenheiten angepaßt zu werden. Sie soll darüber hinaus einfach handbar sein und eine Mittenzentrierung der zu verbindenden Enden bewirken. Sie soll auch eine ausreichend feste Lagefixierung der miteinander zu verschweißenden und zueinander zentrierten Teile und Enden zulassen, um den Aufwand das Heftschweißen der provisorisch zu verbindenden Enden und das Wiederauftrennen dieser Heftschweißnähte zu vermeiden. Zugleich soll die Schweißvorrichtung die Zusammenstellung und Verlegung größerer Rohrleitungsstränge und Teilabschnitte ermöglichen, um erforderlich werdende Veränderungen der Rohrführung rechtzeitig vor dem Schweißen feststellen und berücksichtigen zu können. Schließlich soll sie auch noch genügend Freiraum im Bereich der Schweißnähte belassen, um den Anschluß von mechanisierten Schweißeinrichtungen zur kontinuierlichen Herstellung von Rundnähten zu ermöglichen, oder um von Hand zu schweißen.

Diese Aufgabe wird durch die Merkmale des Anspruchs 1 gelöst. Vorteilhafte Weiterbildungen sind in den Ansprüchen 2 bis 14 beschrieben.

Infolge der Verwendung von am Rohraußenumfang spannenden Rohrklammern wird die Voraussetzung geschaffen, größere Rohrleitungsabschnitte mit vielen miteinander zu verschweißenden Komponenten zu zentrieren und zu fixieren, ohne daß die Schweißvorrichtung oder Teile derselben nach dem Anbringen einer Verbindungsnaht wieder abgenommen werden muß, um irgendwelche innenspannende oder innenzentrierende Vorrichtungen aus dem geschweißten Rohrabschnitt wieder herauszuziehen. Dabei ermöglicht es die Verwendung von an ihren beiden Enden spannenden Rohrklammern, diese über eine Montagehilfsschiene unter einander zu verbinden und gewährleistet zugleich auch eine exakt parallele Ausrichtung dieser einzelnen Rohrabschnitte und Armaturen zur Montagehilfsschiene, wenn Rohrklammern gleicher Länge verwendet werden. Infolge der axialen Verschiebbarkeit der Rohrklammern längs der Montagehilfsschiene läßt sich die Schweißvorrichtung ohne weiteres an unterschiedlich lange Rohrabschnitte oder Armaturstücke anpassen .

Die Handhabung der Schweißvorrichtung wird besonders erleichtert, wenn die Rohrklammer an ihren beiden Enden in vorteilhafter Weiterbildung der Erfindung je ein unabhängig betätigbares Klemmenbackenpaar trägt. Hierdurch wird es möglich, die einzelnen Rohrklammern zunächst an der Montageschiene auszurichten und in der ausgerichteten Position einzeln festzustellen und sodann die einzelnen Rohrabschnitte bzw. Armaturstücke an den Rohrklammern zu befestigen.

Besonders zweckmäßig ist es, wenn die eine Klemmbacke des am zu verschweißenden Rohr bzw. Armatur anklemmbaren Klemmbackenpaares abnehmbar ausgebildet ist. Hierdurch. kann jede einzelne Rohrklammer für sich nach dem Verschweißen des von ihr gehaltenen Rohr- bzw. Armaturendes unabhängig von den übrigen Rohrklammern von diesem Rohr- bzw Armaturenende nach Abnahme der einen Klemmbacke durch Drehen um die Montagehilfsschiene weggeschwenkt werden. Dabei ist die Verwendung von Montagehilfsschienen mit zylindrischem Außenumfang besonders vorteilhaft.

Rohrbögen und Winkelstücke lassen sich mit dieser Schweißvorrichtung besonders gut verschweißen, wenn das am zu verschweißenden Rohrbogen bzw. Winkelstück zur Anlage bringbare Klammbackenpaar vorteilhafterweise um 45° bzw. um 90° gegenüber der Symmetrieachse der Hilfsschiene abgewinkelt ist.

Der Einsatzbereich der Schweißvorrichtung läßt sich erweitern, wenn in zweckmäßiger Weiterbildung der Erfindung in die Halbschalen der am zu verschweißenden Rohr bzw. Armatur zur Anlage bringbaren Klemmbacken Adapterstücke zum Ausgleich abweichender Spanndurchmesser einsetzbar sind. In diesem Fall können auch Übergänge mit sich änderndem Querschnitt oder auch Armaturteile mit größerem Außendurchmesser zentrisch gespannt werden. Dabei wird die Montage bedeutend erleichtert, wenn die Adapterstücke in Ausgestaltung der Erfindung, etwa durch Anschrauben oder Anklemmen an die Klemmbacken befestigbar sind. .

Weitere Einzelheiten der Erfindung werden anhand der in den Figuren dargestellten Ausführungsbeispiele näher erläutert. Es zeigen:

Fig. 1 eine schaubildliche Ansicht zweier an einem Rohrstrang angeklemmter erfindungsgemäßer Schweißvorrichtungen

Fig. 2 eine Ansicht der Stirnseite einer Rohrklammer,

Fig. 3 eine speziell für die Halterung von Rohrbögen ausgebildete Rohrklammer in Seitenansicht,

Fig. 4 eine Ansicht der Stirnseite der Rohrklammer der Fig. 3 und

Fig. 5 zwei für die Halterung von Armaturen geformte Rohrklammern mit einer eingespannten Armatur.

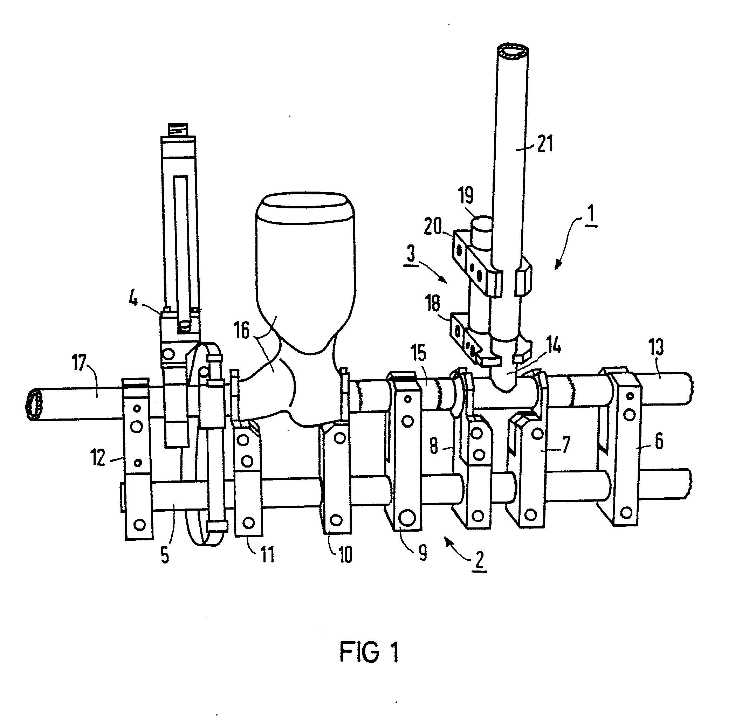

Die Fig. 1 zeigt eine schaubildliche Gesamtansicht eines Rohrabschnittes 1, der mit Hilfe von zwei erfindungsgemäßen Schweißvorrichtungen 2, 3, zusammengestellt, zentriert und anschließend ohne vorheriges Heftschweißen mit einer mechanischen Schweißeinrichtung 4 verschweißt wurde. Am unteren Rand der Fig. 1 erkennt man eine horizontal verlaufende Montagehilfsschiene 5 - im Ausführungsbeispiel ein gerades Rohrstück - an der sieben Rohrklammern 6 bis 12 befestigt ist. Jede dieser Rohrklammern ist mit ihrem einen Ende an der Montagehilfsschiene 5 festgeklemmt und hält mit den an ihrem jeweils gegenüberliegenden Ende befindlichen Spannbacken die miteinander zu verschweißenden Rohrabschnitte bzw. Armaturen fest. So wird durch die Rohrklammer 6 das in der Fig. 1 von rechts kommende Rohrende 13 festgehalten und mit der Montagehilfsschiene 5 verbunden. Die beiden ebenfalls mit der Montagehilfsschiene befestigten Rohrklammern 7 und 8 halten ein T-Stück 14. Die Rohrklammer 9 hält ein am T-Stück 14 anschließendes kurzes Rohrstück 15. Die Rohrklammern 10 und 11 halten eine Armatur 16, die Rohrklammer 12 das Ende eines nach links weiterlaufenden Rohres 17. An dem in der Fig. 1 nach oben aufsteigenden Ende des T-Stücks 14 ist eine weitere Rohrklammer 18 befestigt, die eine weitere Montagehilfsschiene 19 - im vorliegenden Fall ein kurzes Rohrstück - hält. An diesem kurzen Rohrstück 19 ist eine zweite Rohrklammer 20 befestigt, die das Ende eines an dem T-Stück 14 anzuschweißenden nach oben führenden Rohres 21 festhält.

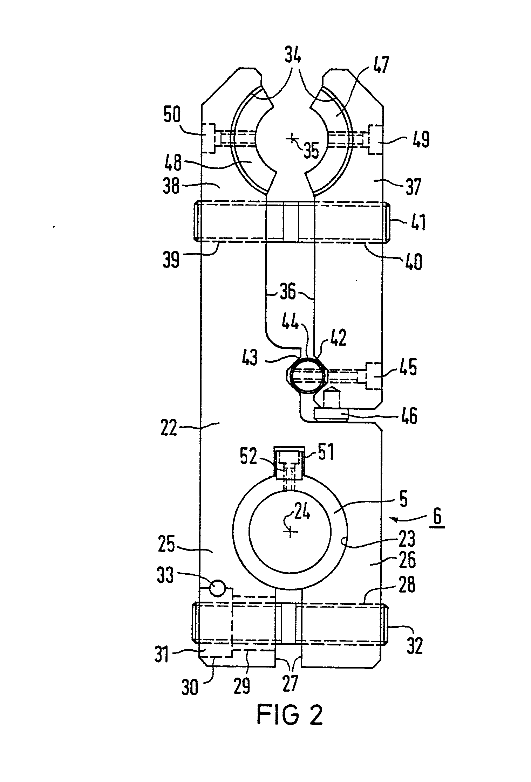

Der Aufbau der Rohrklammer 6 ist anhand der Fig. 2 erläutert. Der Grundkörper 22 der Rohrklammer 6 trägt an seinem einen Ende eine Bohrung 23, deren lichte Weite dem Außendurchmesser der zu verwendeten Montagehilfsschiene 5, vorzugsweise einem genormten Rohr angepaßt ist. Dieses Ende der Rohrklammer 6 ist in der Ebene der Achse 24 der Bohrung 23 und längs der Längsachse der Rohrklammer 6 bis in die Bohrung 23 hinein geschlitzt. Im geschlitzten Bereich sind durch die beiden so gebildeten Klemmbacken 25, 26 quer zum Schlitz 27 gebohrt. Die Bohrung in der Klemmbacke 26 trägt ein Gewinde 28. Die Bohrung 29 in der Klemmbacke 25 trägt eine Ausdrehung 30 für eine Gewindebuchse 31. In das Gewinde 28, der einen Spannbacke 26 und in die Gewindebuchse 31 ist eine Stiftschraube 32 geschraubt. Diese ist an ihrem einen Ende mit einem Links- und an ihrem anderen Ende, .mit einem Rechtsgewinde versehen. Die Gewindebuchse 31 ist in der Ausdrehung 30 der Klemmbacke 25 über eine Klemmschraube 33 arretiert.

Das gegenüberliegende Ende der Rohrklammer 6 trägt ebenfalls eine Bohrung 34, deren lichte Weite dem Außendurchmesser der damit zu spannenden Rohre angepaßt ist. Diese Bohrung 34 ist exakt parallel zur Bohrung 23. Hier ist jedoch der durch die Achse 35 dieser Bohrung gehende Schlitz 36 bis etwa zur Mitte der Rohrklammer 6 verlängert. Die eine der beiden so gebildeten Spannbacken 37, 38 ist etwa in der Mitte der Rohrklammer 6 von dessen Grundkörper 22 abgetrennt. Auch diese beiden Spannbacken tragen je einen senkrecht zur Schlitzebene ausgerichtete Gewindebohrung 39, 40. Diese Gewindebohrungen 40, 41 befinden sich unmittelbar neben den halbkreisförmigen Anlageflächen der beiden Spannbacken 37, 38 auf der der Montagehilfsschiene 5 zugewandten Seite. Dabei besitzt die eine Gewindebohrung ein Rechtsgewinde und die andere Gewindebohrung ein Linksgewinde. Beide Gewindebohrungen 39, 40 fluchten zueinander, wenn die beiden Spannbacken 37, 38 an einem zylindrischen Körper etwa einem Rohrstück anliegen. Der Abstand der Spannbacken 37, 38 ist durch eine in die beiden Gewindebohrungen eingeführte Stiftschraube 41 mit einem Links- und einem Rechtsgewinde

einstellbar. Sowohl die lose Spannbacke 37 als auch die feste Spannbacke 38 tragen an einander gegenüberliegenden Seiten je eine prismatische Kerbe 42, 43, in die ein Rundmaterial 44 als Wiederlager einsetzbar ist. Dieses Rundmaterial kann durch eine Befestigungsschraube 45 an der losen Spannbacke 37 befestigt sein. Über eine Justierschraube 46 ist die Höhenlage der losen Spannbacke 37 einstellbar und ist diese verdrehgesichert. In der Fig. 2 ist außerdem noch ein ringsegmentförmiges Adapterstück 47, 48 in den beiden Anlagenflächen der Spannbacken 37, 38 zu erkennen. Diese Adapterstücke können durch je eine Befestigungsschraube 49, 50 an der Anlagefläche der jeweiligen Spannbacke befestigt sein. Die Figur 2 zeigt außerdem eine in den Rand der Bohrung 23 eingelassene rechteckige Einfräsung 51 für einen bedarfsweise auf die Montagehilfsschiene 5 aufzuschraubenden Keil 52.

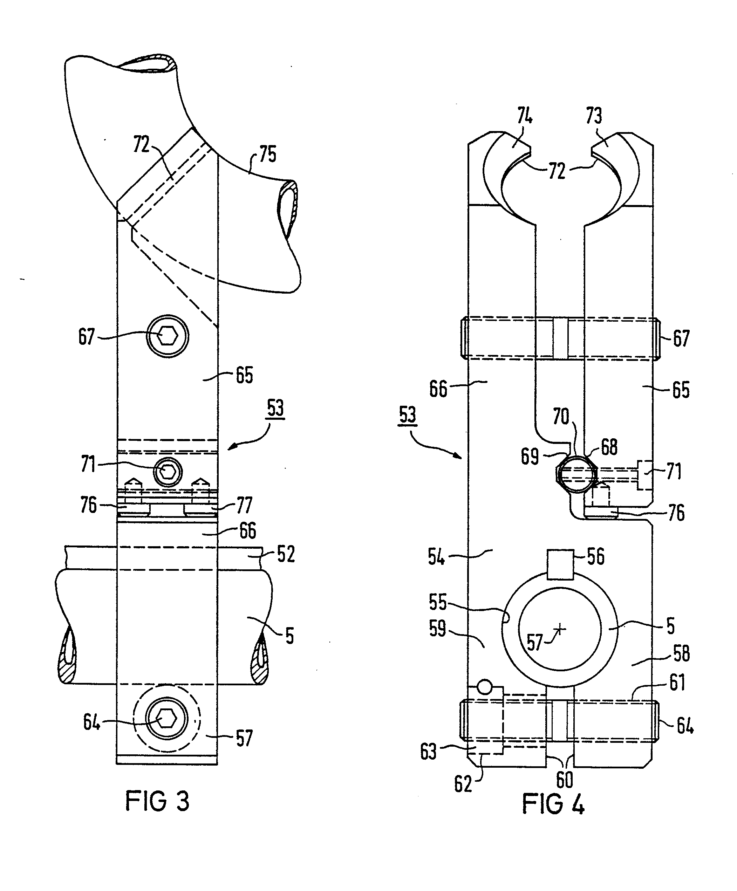

Die Figuren 3 und 4 zeigen eine Rohrklammer 53, die ähnlich der in der Fig. 2 gezeigten Rorhklammer 6 aufgebaut ist. Auch hier trägt der Grundkörper 54 an seinem einen Ende eine Bohrung 55, deren lichte Weite dem Außendurchmesser der zu verwendenden Montagehilfsschiene 5 angepaßt ist und eine rechteckige Ausfräsung 56 für den auf der Montagehilfsschiene 5 bedarfsweise aufsetzbaren Keil 52. Dieses Ende der Rohrklammer ist in der Ebene der Achse 57 dieser Bohrung geschlitzt. Die beiden Klemmbacken 58, 59 sind auch hier quer zum Schlitz 60 durchbohrt. In die eine Bohrung ist ein Gewinde 61 und die andere eine Ausdrehung 62 für eine Gewindebuchse 63 eingebracht. Diesen beiden Klemmbacken 58, 59 ist, wie anhand des Ausführungsbeispiels der Fig. 2 erläutert wurde, eine Stiftschraube 64 mit einem Links- und einem Rechtsgewinde zugeordnet. Auch das Spannbackenpaar besteht, sie anhand der Fig. 2 erläutert, aus einer losen und einer festen Spannbacke 65, 66, mit einem Links- und Rechtsgewinde für eine Stiftschraube 67, je einer prismatischen Kerbe 68, 69 für ein Rundmaterial 70 und eine Befestigungsschraube 71 für das Rundmaterial. Abweichend vom Ausführungsbeispiel der Fig. 2 sind jedoch die Spannbacken 65, 66 an ihren Enden stark verschmälert und um 45° gegenüber der Längsachse der Rohrklammer 53 schräggestellt. Beide Spannbacken sind außerdem zur Verschmälerung der Klemmfläche 72 einseitig konisch eingesenkt. Durch diese Einsenkungen 73, 74 wird sichergestellt, daß ein sattes Anliegen auch an einem gebogenen Rohrstück 75 gewährleistet wird. Außerdem trägt die lose Spannbacke 65 zwei Justierschrauben 76, 77.

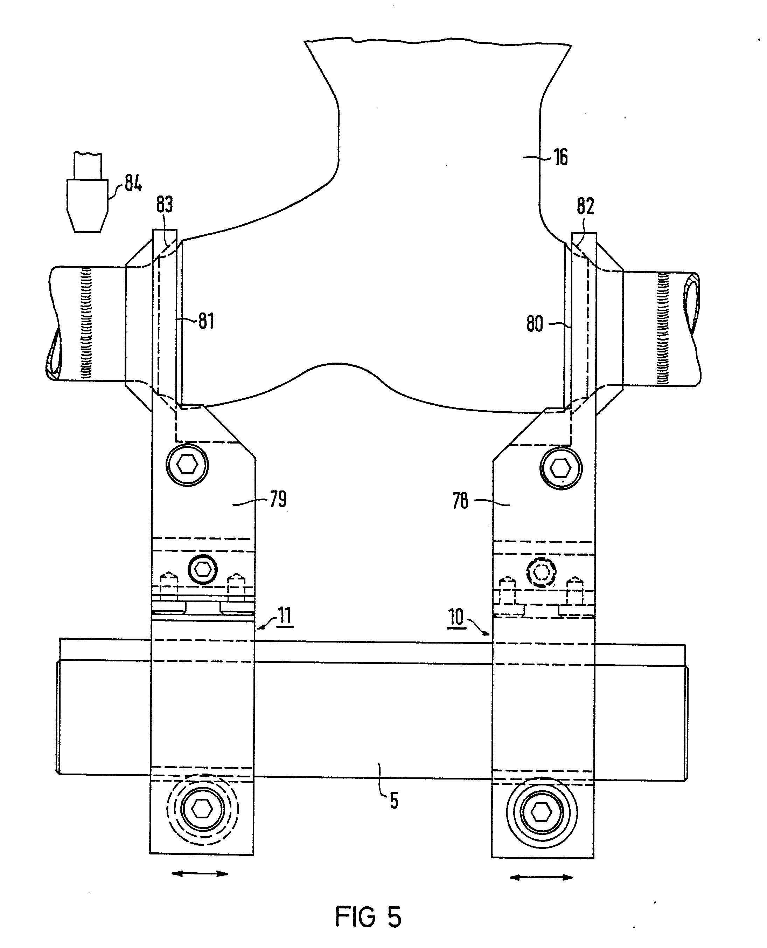

Die Fig. 5 schließlich zeigt in vergrößerter Darstellung die beiden an der Montagehilfsschiene 5 befestigten Rohrklammern 10 und 11, die die Armatur 16 zur Montagehilfsschiene und damit auch zu den von den übrigen an der Montagehilfsschiene befestigten Rohrklammern gehaltenen Rohrenden zentriert hält. Die beiden Rohrklammern 10 und 11 sind identisch. Deren Spannbacken 78, 79 (jeweils nur eine sichtbar) sind an ihrem, der Armatur 16 zugewandten Ende einseitig stark verschmälert. Die Spannflächen dieser Spannbacken 78, 79 tragen auf der verschmälerten Seite 80, 81 außerdem eine kegelförmige Einsenkung 82, 83 und sind auf der jeweils gegenüberliegenden Seite konisch vorgewölbt. Im übrigen sind diese Spannbacken in der gleichen Weise aufgebaut, wie anhand der Fig. 2 beschrieben wurde. Durch die Verschmälerung der der Armatur 16 zugewandten Spannflächen wird ein sauberer Sitz auch an sich konisch verjüngenden Armaturenden gewährleistet. Das Ausführungsbeispiel der Fig. 5 verdeutlicht auch, daß die kegelförmigen Einsenkungen 82, 83 der Spannflächen der Spannbacken 78, 79 bestens geeignet sind, sich an konisch erweiterten Armaturengehäusen anzupassen.

Sollen mehrere Rohrstücke eines Rohrstranges miteinander verschweißt werden, so muß für jedes Rohrende je eine Rohrklammer 6 bis 12 auf der Montagehilfsschiene 5, die im einfachsten Fall ein gerades Rohrstück entsprechenden Durchmessers sein kann, aufgefädelt werden. Nachdem die erste Rohrklammer 6 an der Montagehilfsschiene 5 festgeklemmt worden ist, indem die den Schlitz 25 überbrückende Stiftschraube 32 angezogen wurde, während die übrigen Rohrklammern in dem durch die Länge der einzelnen Rohrabschnitte 14, 15 bzw. Armaturen 16 vorgegebenen Abstand auf die Montagehilfsschiene 5 aufgefädelt und parallel zur erstgespannten Rohrklammer 6 an der Montagehilfsschiene befestigt werden. Nunmehr können die einzelnen Rohrabschnitte und Armaturen in der Nähe ihrer Enden zwischen die losen Spannbacken der einzelnen Rohrklammern geschoben werden. Nach exakter Einstellung der Schweißabstände können sie dort über die Stiftschrauben der Spannbacken fixiert werden. Dabei drückt die Stiftschraube 41 sowohl die beiden Anlageflächen der Spannbacken 37, 38 an das eingeschobene Rohrende as auch das an der losen Spannbacke 37 befestigte Rundmaterial 44 gegen die prismatische Einkerbung 43 der festen Spannbacke 38. Durch die Führung in den prismatischen Einkerbungen 43, 44 ist die lose Spannbacke 37 in Längsrichtung der Rohrklammer 6 zur festen Spannbacke 38 höhenzentriert und ist zugleich das gespannte Rohr 13 zwangsläufig parallel zur Montagehilfsschiene 5 ausgerichtet. Da der Spannabstand zwischen den Klemmbacken 25, 26 und Spannbacken 37, 38 bei allen Rohrklammern mit Ausnahme jener Rohrklammer 53 mit den abgewinkelten Spannbacken 65, 66 und einigen Spezialrohrklammern gleich ist, ist somit zugleich auch gewährleistet, daß alle gespannten Rohrabschnitte und Armaturen untereinander parallel zur Montagehilfsschiene ausgerichtet sind und gleichen Abstand zu ihr haben. Bei paralleler Ausrichtung der der Rohrklammern untereinander, was durch Aufschrauben eines Keiles 52 auf die Montagehilfsschiene 5 stark erleichtert wird, fluchten sie darüber hinaus auch untereinander.

Für den Fall, daß verjüngende Übergangsstücke angeschweißt werden müssen, können zwischen die Anlagenflächen der Spannbacken Adapterstücke 47, 48 eingeschraubt werden, Dabei wird zugleich gewährleistet, daß auch der kleinere Durchmesser zu dem größeren Durchmesser der übrigen Rohrabschnitte fluchtet. Durch die einseitige Verschmälerung der Enden der die Armaturen haltenden Spannbacken 78, 79 und ihre Einsenkung auf der verschmälerten Seite wird sowohl die Halterung von Armaturen erleichtert, als auch wenig Platz auf der Seite der anzubringenden Schweißnaht - in der Fig. 5 durch einen Schweißbrenner 84 angedeutet - benötigt. Dabei ermöglicht es die Verwendung von Rohrklammern 6 mit jeweils einer losen Spannbacke, diese Spannbacke nach dem Verschweißen einzelner Rohrabschnitte und Armaturen durch Aufschrauben der Stiftschraube 41 abzunehmen und die Rohrklammer nach dem lockeren Lösen auch der Stiftschraube 32 durch Drehen um die Montagehilfsschiene 5, nach Entfernen des Keiles 52, wegzuschwenken, selbst wenn die übrigen Rohrklammern fest angeklemmt bleiben müssen. Zeigt es sich beim Aufbau eines Rohrabschnittes mit Hilfe der Rohrklammern und Hilfsschienen, daß Kollisionen mit Hindernissen oder Störkanten drohen - sei es, daß diese versehntlich unberücksichtigt geblieben waren oder infolge Änderung nachträglich entstanden sind - so bereitet es keine Schwierigkeiten, die einzelnen Rohrabschnitte und Armaturen in anderer Konfiguration neu zusammenzustellen, weil keine Heftschweißung mehr aufzutrennen sind.

Es ist ein großer Vorteil dieser Schweißvorrichtung 2, 3, daß sie wenig Platz benötigt und darüber hinaus flexibel an die jeweiligen räumlichen Gegebenheiten der einzelnen Rohrabschnitte anpaßbar ist. Wie die Fig. 1 zeigt können auch verschiedene Schweißvorrichtungen bei Bedarf nebeneinander an ein und demselben Rohrabschnitt angeordnet werden, ohne sich gegenseitig zu behindern. Der Platzbedarf der einzelnen Rohrklammern in Längsrichtung der miteinander zu verschweißenden Rohre bzw. Armaturen ist so gering, daß sie die Verwendung von mechanischen Schweißeinrichtungen ebenso ermöglicht, wie die Handschweißung.

Die Anlageflächen der Rohrklammern an die zu verschweißenden Rohre order Armaturen brauchen nicht, wie in den Figurwen dargestellt, rund zu sein. Auch prismatische oder selbst ebene Anlagenflächen wären möglich.

Bezugszeichenliste

Fig. 1

| | |
|---|---|
| Rohrabschnitt | 1 |
| Schweißvorrichtung | 2, 3 |
| Mech. Schweißeinrichtung | 4 |
| Montagehilfsschiene | 5 |
| Rohrklammer | 6, 7, 8, 9, 10, 11, 12 |
| Rohrende | 13 |
| T-Stück | 14 |
| Rohrstück | 15 |
| Armatur | 16 |
| Rohr | 17 |
| Rohrklammer | 18 |
| Montagehilfsschiene | 19 |
| Rohrklammer | 20 |
| Rohr | 21 |

Fig. 2

| | |
|---|---|
| Grundkörper | 22 |
| Bohrung | 23 |
| Achse | 24 |
| Klemmbacken | 25, 26 |
| Schlitz | 27 |
| Gewinde | 28 |
| Bohrung | 29 |
| Ausdrehung | 30 |
| Gewindebuchse | 31 |
| Stiftschraube | 32 |
| Klemmenschraube | 33 |
| Bohrung | 34 |
| Achse | 35 |
| Schlitz | 36 |
| Spannbacke | 37, 38 |
| Gewindebohrung | 39, 40 |

| Stiftschraube | 41 |
| Kerbe | 42, 43 |
| Rundmaterial | 44 |
| Befestigungsschraube | 45 |
| Justierschraube | 46 |
| Adapterstück | 47, 48 |
| Befestigungsschraube | 49, 50 |
| Einfräsung | 51 |
| Keil | 52 |

## Fig. 3, 4

| Rohrklammer | 53 |
| Grundkörper | 54 |
| Bohrung | 55 |
| Ausfräsung | 56 |
| Achse | 57 |
| Klemmbacken | 58, 59 |
| Schlitz | 60 |
| Gewinde | 61 |
| Ausdrehung | 62 |
| Gewindebuchse | 63 |
| Stiftschraube | 64 |
| Spannbacken | 65, 66 |
| Stiftschraube | 67 |
| Kerbe | 68, 69 |
| Rundmaterial | 70 |
| Befestigungsschraube | 71 |
| Klemmfläche | 72 |
| Einsenkung | 73, 74 |
| Rohrstück | 75 |
| Justierschraube | 76, 77 |

<u>Fig. 5</u>

Spannbacke                 78, 79
Seite                      80, 81
Einsenkung                 82, 83
Schweißbrenner             84

**Ansprüche**

1. Schweißvorrichtung für Rohrleitungen mit Spannmitteln zur Halterung der miteinander zu verschweißenden Rohrenden **dadurch gekennzeichnet,**daß mehrere an ihren beiden Enden am Rohraußenumfang spannende Rohrklammern (6 bis 12) mit ihrem jeweils einen Ende an einer parallel zu dem zu verschweißenden Teilabschnitt verlaufenden Montagehilfsschiene (5) in axial beliebig verschiebbarer Position festklemmbar und mit ihrem jeweils anderen Ende an einen der miteinander zu verschweißenden Rohr- bzw. Armaturenden (13 bis 17, 21, 75) festklemmbar sind.

2. Schweißvorrichtung nach Anspruch 1, **dadurch gekennzeichnet,**daß die Rohrklammer (6 bis 13) an ihren beiden Enden je ein unabhängig betätigbares Klemm- bzw. Spannbackenpaar (25, 26, 37, 38, 58, 59, 65, 66, 78, 79) trägt.

3. Schweißvorrichtung nach Anspruch 1, **dadurch gekennzeichnet,**daß die eine Spannbacke (37, 65, 79) des am zu verschweißenden Rohr bzw. Armatur anklemmbaren Spannbackenpaares abnehmbar ausgebildet ist.

4. Schweißvorrichtung nach Anspruch 1, **dadurch gekennzeichnet,**daß die Montagehilfsschiene (5) einen zylindrischen Außenumfang besitzt.

5. Schweißvorrichtung nach Anspruch 2, **dadurch gekennzeichnet,**daß das am zu verschweißenden Rohr zur Anlage bringbare Spannbackenpaar (65, 66) zur Halterung von Rohrbögen (75) um 45° abgewinkelt ist.

6. Schweißvorrichtung nach Anspruch 2, **dadurch gekennzeichnet,**daß das am zu verschweißenden Rohr bzw. Armatur zur Anlage bringbare Spannbackenpaar zur Halterung an Rohrbögen um 90° abgewinkelt ist.

7. Schweißvorrichtung nach Anspruch 1, **dadurch gekennzeichnet,**daß in die Halbschalen der am zu verschweißenden Rohr bzw. Armaturen zur Anlage bringbaren Spannbacken (37, 38) Adapterstücke (47, 48) zum Ausgleich abweichender Spanndurchmesser einsetzbar sind.

8. Schweißvorrichtung nach Anspruch 7, **dadurch gekennzeichnet,**daß die Adapterstücke (47, 48) an die Spannbacken befestigbar sind.

9. Schweißvorrichtung nach Anspruch 2, **dadurch gekennzeichnet,**daß die am zu verschweißenden Rohr bzw. Armatur zur Anlage bringbaren Spannbacken (65, 66, 78, 79) in Längsrichtung des zu verschweißenden Teilabschnittes einseitig verschmälert sind.

10. Schweißvorrichtung nach Anspruch 9, **dadurch gekennzeichnet,**daß die einseitig verschmälerten Spannbacken (65, 66) auf der verschmälerten Seite konisch ausgedreht und auf der gegenüberliegenden Seite konisch verstärkt sind.

11. Schweißvorrichtung nach Anspruch 1, **gekennzeichnet durch**Rohrklammern abgestufter, unterschiedlicher Länge.

12. Schweißvorrichtung nach Anspruch 1, **gekennzeichnet durch**Rohrklammern veränderbarer Länge.

13. Schweißvorrichtung nach Anspruch 1, **dadurch gekennzeichnet,**daß als Spannmittel Stiftschrauben (32, 41, 67) mit an beiden Enden gegenläufigem Gewinde verwendet sind.

14. Schweißvorrichtung nach Anspruch 13 und 2, **dadurch gekennzeichnet,**daß die beiden Backen eines Spann- bzw. Klemmbackenpaares gegenläufige Gewinde für die Stiftschrauben (32, 41, 67) besitzen.

15. Schweißvorrichtung nach Anspruch 13, **dadurch gekennzeichnet,**daß die eine Klemmebacke bei einem einteiligen Klemmbackenpaar eine Gewindebohrung (28, 61) für die Stiftschraube (32, 64) trägt, die gegenüberliegende Klemmbacke (25, 59) jedoch zur Aufnahme einer verkeilbaren Gewindebuchse (31, 63) aufgebohrt ist.

16. Schweißvorrichtung nach Anspruch 4, **dadurch gekennzeichnet,**daß die Montagehilfsschiene ein gerades Rohrstück ist.

17. Schweißvorrichtung nach Anspruch 4, **dadurch gekennzeichnet,**daß die Montagehilfsschiene (5) ein gewinkeltes Rohrstück ist.

18. Schweißvorrichtung nach Anspruch 2, **dadurch gekennzeichnet,** daß je eine Spannbacke beider Spannbackenpaare einer Rohrklammer abnehmbar ausgebildet sind.

85 P 6006

FIG 1

FIG 2

FIG 3

FIG 4

35 P 6006

FIG 5

![Europäisches Patentamt] **Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 946 275 (MASCHINENFABRIK ESSLINGEN) <br> * Seite 2, Anspruch 1 * <br><br> --- | 1,4 | B 23 K 37/04 |
| Y | US-A-4 324 048 (CHEMETRON) <br> * Figuren 1-3; Spalte 3, Zeilen 27-39 * <br><br> --- | 1,4 | |
| A | FR-A-1 430 032 (CORRE) <br><br> ----- | | |

|  | RECHERCHIERTE SACHGEBIETE (Int. Cl.4) |
|---|---|
|  | B 23 K |

Der vorliegende Recherchenbericht wurde für alle Patentansprüche erstellt.

| Recherchenort <br> DEN HAAG | Abschlußdatum der Recherche <br> 13-02-1986 | Prüfer <br> HOORNAERT W. |
|---|---|---|